# FASCICULE DE BREVET EUROPEEN

(11) **EP 0 756 152 B1**
(45) Date de publication et mention de la délivrance du brevet: **22.03.2000**
(21) Numéro de dépôt: 96401681.0
(22) Date de dépôt: 26.07.1996
(51) Int. Cl.: G01B 11/30

(54) **Procédé et dispositif de détection de l'état de surface de pièces à surface réfléchissante, applicable au contrôle de rugosité de pièces polies**
Verfahren und Vorrichtung zur Detektierung des Zustandes der Oberfläche eines Objektes mit einer reflektierenden Oberfläche, anwendbar zur Kontrolle der Rauhigkeit von polierten Objekten
Method and device for detecting the state of the surface of parts with a reflecting surface, applicable for controlling the roughness of polished parts

(30) Priorité: 26.07.1995 FR 9509561
(43) Date de publication de la demande: 29.01.1997
(73) Titulaire: SATIMAGE, 94310 Orly (FR)
(72) Inventeur: Delyon, François, 92340 Bourg-la-Reine (FR); Levy, Yves-Emmanuel, 92130 Issy-les-Moulineaux (FR)
(74) Mandataire: Thibon-Littaye, Annick

(56) Documents cités:
- EP-A- 0 486 219
- WO-A-91/18278
- DE-A- 3 919 893
- US-A- 4 682 041
- US-A- 4 846 578
- US-A- 5 142 648
- US-A- 5 309 222

## Description

La présente invention concerne les techniques d'examen non destructif des états de surface. Elle propose un procédé et un dispositif pour l'examen de pièces à surface réfléchissante dans les conditions opératoires, qui sont destinés notamment, bien que non limitativement, à l'examen de l'état de surface de pièces polies, en particulier dans le cadre de la détection et du contrôle de leur rugosité. En conséquence, un domaine d'application privilégié de l'invention concerne le contrôle de qualité dans des chaînes de fabrication de pièces en série ou dans des ateliers de mise au point d'outillages, chaque fois qu'il peut être avantageux de vérifier la qualité de telles pièces par une analyse de leur état de surface, donc notamment d'une rugosité résultant d'un défaut de polissage d'une pièce mécanique polie.

Actuellement, les contrôles effectués dans ce genre d'installations durent relativement longtemps, sachant que l'on procède en général à l'aide d'un rugosimètre à palpeur, relevant la rugosité par contact et segment par segment. D'autres techniques procèdent par voie optique au moyen d'un faisceau laser, mais elles manquent pratiquement tout autant de sensibilité dans les faibles rugosités.

Par rapport à cet état de la technique, l'invention vise notamment à assurer un contrôle rapide des états de surface, réalisable en une durée de l'ordre de la seconde, et à analyser en une seule opération la surface globale à examiner. Dans ses applications préférées, elle vise également à limiter les investissements et les frais de fonctionnement des postes de contrôle de qualité dans l'industrie mécanique et à mettre mieux que d'autres techniques la mise en oeuvre et les manipulations à la portée du personnel habitué des conditions de fabrication de pièces métalliques, réfléchissantes par nature quand elles sont correctement polies.

Pour cela, l'invention fait appel à une méthode optique qui implique la réflexion de la lumière sur la surface de la pièce examinée, mais plutôt que de se contenter d'analyser des questions de forme relevant de l'optique géométrique, on exploite les conséquences des phénomènes de diffusion relevant des théories ondulatoires de la lumière pour dresser, de manière quasiment instantanée, une image dérivée de la surface de la pièce examinée faisant ressortir des irrégularités telles que des rugosités qui seraient totalement invisibles à l'oeil nu.

L'art antérieur en matière d'examen non destructif de surfaces par voie optique est illustré par les documents de brevet US-A-4 682 041 et US-A-5 309 222. On y trouve décrit, d'une part un logiciel d'analyse d'une image créée par projection sur une surface rugueuse par recours aux séries de Fourier, d'autre part une méthode de déformation d'une mire de traits éclairant une surface de manière à annihiler toute différence constatée. Mais par les techniques connues de ce genre, on ne sait jamais que détecter une information qui reste éloignée de la définition classique de la rugosité, car elle est essentiellement influencée par la période des ondulations superficielles, et elle ne prend pas en compte l'amplitude de ces ondulations comme il le faudrait.

Par ses différentes caractéristiques telles qu'elles seront décrites et revendiquées ci-après, considérées isolément ou en toute combinaison opérante, l'invention permet d'observer les états de surface avec une précision considérablement améliorée, y compris dans les variations correspondant à des micro-rugosités. Elle permet ainsi de réaliser un contrôle en ligne de pièces métalliques polies dans une chaîne de fabrication en série de pièces toutes conformes à un même modèle, telle un automate de contrôle capable de déclencher des actions en fonction des résultats de son analyse. Elle s'applique aussi en contrôle hors ligne, par exemple dans un atelier de mise au point d'outillages, le dispositif suivant l'invention servant d'outil de mesure. Dans tous les cas, elle permet d'observer véritablement la rugosité, en prenant en compte l'amplitude des ondulations de dépoli en altitude par rapport au niveau nominal de la surface.

Conformément à l'une de ses caractéristiques principales, l'invention a pour objet un procédé de détection de l'état de surface d'une pièce à surface réfléchissante, applicable notamment au contrôle de rugosité d'une pièce polie, suivant lequel on expose ladite pièce à une mire d'éclairage présentant des zones alternativement claires et sombres, on détecte la lumière réfléchie par ladite pièce par un dispositif de détection sensible aux intensités lumineuses pixel par pixel, ladite mire étant configurée, en liaison avec ledit dispositif de détection, de sorte que l'image de mire réfléchie vers lui forme une trame plane de zones alternativement claires et sombres suivant des dimensions prédéterminées, répondant de préférence à une périodicité spatiale prédéterminée, en cas de réflectivité totale par une surface lisse, et l'on examine sur l'image ainsi réfléchie des variations de contraste que provoquent des irrégularités de surface, telles que la rugosité locale, par diffusion de la lumière réfléchie à partir des contrastes de la trame.

Avantageusement ledit examen s'effectue en comparant en chaque pixel le contraste détecté à la valeur maximale de contraste observée parmi les pixels de son voisinage, l'angle d'incidence de la lumière étant réglé pour que la perte de réflectivité globale par diffusion ne dépasse pas 40 %. Ceci permet de disposer en permancence et en temps réel en tous points de la surface reflétée, d'une référence de contraste correspondant à une réflectivité sensiblement non atténuée.

Conformément à une autre caractéristique principale, l'invention a pour objet un dispositif de détection de l'état de surface d'une pièce réfléchissante, applicable notamment au contrôle de la rugosité superficielle d'une pièce polie, comportant, dans un poste d'examen de ladite pièce, des moyens d'exposition de sa surface à une mire présentant des zones alternativement claires et sombres, préalablement configurée en fonction notamment de la forme géométrique de la pièce à examiner et/ou des dimensions de rugosité à déceler, un dispositif de détection de la lumière réfléchie par ladite pièce, sensible aux intensités lumineuses pixel par pixel, ledit dispositif de détection étant disposé de sorte que l'image de mire réfléchie vers lui forme une trame plane de zones alternativement claires et sombres, respectant de préférence une périodicité spatiale prédéterminée, et des moyens pour faire ressortir sur l'image réfléchie ainsi détectée des variations de contraste que provoquent les irrégularités de surface, telles que les rugosités locales, par diffusion de la lumière réfléchie à partir des contrastes de la trame, et pour comparer le contraste détecté en chaque pixel avec un maximum de contraste constaté en son voisinage.

Dans le cas fréquent où la surface à examiner est plane, par exemple celle d'une tôle plane, la mire utilisée pour l'éclairer est préférentiellement à dessin en réseau à pas régulier, notamment en forme de damier de carrés clairs et sombres alternés. Il est cependant souhaitable de la configurer dans sa disposition par rapport à l'objet examiné et de régler l'angle d'incidence de la lumière projetée, en symétrie avec le dispositif de détection, de manière à s'assurer que l'image reflétée vers le dispositif de détection présente un flou suffisant pour le degré de sensibilité recherché.

Dans une forme de réalisation particulièrement utile dans les chaînes de fabrication de pièces mécaniques, on admet successivement chacune des pièces d'une même série, toutes géométriquement conformes à un modèle prédéterminé, dans ledit poste d'examen. Dans le cas de la mise au point d'un outillage spécifique, on y admettra de manière similaire la même pièce à différents stades de son usinage, notamment à travers différentes étapes de polissage. On aura alors fréquemment intérêt à utiliser plusieurs mires interchangeables pour modifier aisément les conditions d'éclairage au cours de ces opérations.

Le poste d'examen optique est avantageusement équipé, pour ce qui concerne le dispositif de détection, d'un système bidimensionnel de capteurs de lumière. Cette capacité peut être obtenue par des séries de capteurs à balayage, mais on leur préférera une caméra matricielle, notamment de type à transfert de charges dit CCD. Une telle caméra, dans les versions industriellement disponibles actuellement, fonctionne comme une série de barrettes de capteurs détectant simultanément les intensités lumineuses reçues sur un très grand nombre de pixels. Leurs valeurs sont converties en variations de tension d'un signal électrique. Un traitement approprié de ce signal analogique permet alors d'analyser les contrastes plus ou moins prononcés entre chaque pixel et les pixels voisins, où la puissance lumineuse détectée est influencée différemment par une ligne de contraste de la mire entre zone claire et zone sombre.

Le nombre des valeurs de gris qui peuvent être ainsi distinguées les unes des autres peut en général s'élever à une valeur comprise entre 100 et 1 000, plus particulièrement de l'ordre de 200 à 300, ce qui assure une sensibilité suffisante des mesures dans la plupart des cas d'application pratique. Quant à la densité des motifs zone claire plus zone sombre de la trame (donc de la mire), elle est avantageusement choisie en fonction de la géométrie de la surface de pièce captée par la caméra et en fonction de la définition souhaitée pour une cartographie des contrastes, donc des réflectivités atténuées par les rugosités.

Suivant les applications de l'invention, et suivant en particulier la forme géométrique de la pièce examinée ainsi que l'anisotropie éventuelle des rugosités à déceler, il est en général avantageux de donner à la trame réfléchie le dessin d'une grille à traits parallèles ou celui d'un réseau de mailles préférentiellement orthogonales. Le pas est de préférence régulier dans un cas comme dans l'autre, mais le cas échéant, on peut aussi avoir intérêt à varier le pas, lorsque par exemple on cherche à cumuler l'examen de plusieurs régions d'une pièce qui demandent des degrés de polissage différents. Par ailleurs, on prévoira le plus souvent des largeurs égales pour les zones claires et les zones sombres respectivement.

Suivant une forme particulière de mise en oeuvre de l'invention, une telle trame est obtenue par projection vers la pièce examinée d'une mire physique qui est placée à distance de ladite pièce, et dessinée de préférence sur un support de forme simple, lequel sera transparent si l'éclairage s'effectue à travers la mire ou, au contraire, réfléchissant si l'éclairage s'effectue par réflexion de la mire vers la pièce. L'éclairage utilise avantageusement, de façon statique, de la simple lumière blanche, sans collimatage particulier. L'emploi d'un support présentant une surface développable définie par une formule mathématique simple facilite la conception par le calcul du dessin de la mire sur une feuille plane à appliquer sur cette surface support. En variante, on peut constituer une mire équivalente de manière dynamique en commandant ponctuellement l'intensité d'une source lumineuse quelconque, telle qu'un écran cathodique orienté vers la pièce examinée.

En amont des opérations de détection effectuées dans le poste d'examen où la pièce est éclairée, on utilise avantageusement des moyens de calcul automatique pour tracer par anamorphose le dessin que doit comporter la mire en fonction de la forme géométrique de la pièce à examiner, quand elle n'est pas à surface plane, en fonction également de la position de la caméra et des conditions d'éclairage. De ce point de vue, il est à noter que pour les besoins des fabrications industrielles modernes, toutes les informations concernant la géométrie des pièces à examiner sont en général disponibles en fichiers de données informatiques, tels que ceux que fournissent les programmes de conception assistée par ordinateur ou ceux qui servent en alimentation de machines d'usinage programmables. On pourra donc utiliser ces données en combinaison avec le dessin souhaité pour la trame afin de déterminer par programme informatique les instructions à donner à un outil de dessin de la mire, tout en prenant en compte les conditions propres au poste d'examen optique. Parmi ces conditions il figure, en particulier, la forme d'un support matériel recevant le dessin de la mire, encore que dans certaines applications, il soit plus avantageux de se dispenser d'un tel support, en utilisant plutôt directement un faisceau ou écran d'éclairage présentant des variations spatiales d'intensité lumineuse en correspondance avec le dessin de la trame image de mire à créer.

D'autres moyens informatiques sont avantageusement utilisés en aval du poste d'examen optique, pour traiter les informations de l'image détectée, telle qu'elles sont véhiculées par un signal vidéo ou par le signal issu de la caméra CCD ci-dessus mentionnée. Par rapport à ce qu'un opérateur pourrait observer directement, à l'oeil nu, on peut ainsi compléter utilement la qualité de l'analyse de surface, en utilisant de préférence un écran d'ordinateur placé sous la commande desdites informations, une fois converties de la forme analogique à la forme numérique, pour les visualiser en passant par l'intermédiaire d'un traitement d'image faisant ressortir la rugosité locale et/ou des défauts recherchés conformément au procédé de l'invention. De tels moyens d'analyse sont avantageusement conçus, et programmés sur ordinateur, de manière à émettre un signal, pouvant notamment commander une alarme ou diriger la pièce vers un lieu particulier, quand la rugosité locale ou la rugosité moyenne sur une certaine étendue ou sur l'ensemble de la surface examinée de la pièce dépassent un seuil prédéterminé.

En pratique, les défauts d'une surface polie observée se traduisent différemment suivant leurs dimensions par rapport aux propriétés de la lumière. Pour l'application au contrôle de rugosité visée par l'invention, il s'agit de déterminer des défauts présentant des dimensions inférieures à la longueur d'onde de la lumière, donc en pratique d'une fraction de micromètre, ce pour quoi on exploite les phénomènes de diffusion de la lumière que renvoie l'image de mire. Des défauts de polissage qui seraient rigoureusement invisibles individuellement à l'oeil nu, ainsi qu'au microscope optique, se traduisent globalement par un voile et un flou sur l'image réfléchie vers le dispositif de détection, de sorte que l'on évalue la rugosité à partir d'une mesure comparative du contraste local dans le motif de l'image de mire reflété par la surface de la pièce examinée. Pour cela, il est nécessaire seulement que la trame image de mire présente un contraste local à partir duquel on évalue la rugosité. On peut notamment, suivant un mode de mise en oeuvre particulier de l'invention, comparer la trame de référence que l'on a cherché à visualiser en image de mire sur la surface examinée, pour un état de polissage optimal, avec les informations homologues qui sont détectées dans l'image de mire réfléchie.

Simultanément cependant, on peut aussi observer et analyser des défauts de forme constitués par des rayures ou autres irrégularités géométriques à plus grande échelle, présentant un pas supérieur à la longueur d'onde de la lumière, en exploitant alors la déformation locale des lignes de contraste de la trame telle qu'elle est réfléchie par la surface de la pièce vers le dispositif de détection. De tels défauts de forme se traduisent par une distorsion des motifs, mais sans perte de netteté.

Suivant des caractéristiques secondaires de l'invention, il est donc prévu des moyens de calcul automatique pour déterminer, à partir des informations d'intensité lumineuse détectées, une valeur locale de contraste en tout point de la surface, en calculant en chaque point un indice de contraste prenant en compte comme référence un maximum d'intensité et un minimum d'intensité entre un pixel d'image et un ou plusieurs pixels de son voisinage, par exemple sur une aire de 5 à 10 pixels de côté. On établit ainsi une cartographie du contraste, que l'on peut avantageusement compléter en prévoyant des moyens pour mettre en évidence un maximum de contraste et un minimum de contraste sur l'ensemble ou sur une portion de la surface de pièce examinée telle que captée suivant l'image de mire, apparaissant plane et transparente. Une comparaison de cette valeur ou indice de contraste avec un ou plusieurs seuils de référence prédéterminés peut permettre d'en déduire si la pièce est conforme ou défectueuse et quel diagnostic émettre.

Suivant une autre des caractéristiques de l'invention, les moyens de traitement d'image analysant l'image réfléchie perçue par le dispositif de détection sont associés à un moniteur de visualisation des résultats calculés constituant l'écran d'un ordinateur de type courant, équipé d'une souris que l'opérateur déplace à sa guise sur la surface de la pièce telle qu'elle est visualisée sur cet écran. Le traitement du signal véhiculant les informations optiques est alors préférentiellement programmé pour calculer et afficher, pour toute zone pointée par la souris, la valeur que prend en cet endroit un indice numérique caractéristique de la qualité du poli par le degré de rugosité. L'opérateur pourra s'en servir pour confirmer ou infirmer des défauts qu'il repère. L'automatisation peut être encore améliorée en associant à cet indice au moins une valeur seuil, éventuellement propre à chacune des zones principales de la surface de la pièce, en deçà de laquelle la pièce sera considérée défectueuse et devra être envoyée au rebut ou recyclée à l'usinage, par exemple pour reprendre le polissage dans la zone détectée comme étant défectueuse.

Suivant un exemple de réalisation de l'invention, convenant tout particulièrement à des pièces à forme de révolution, la pièce à examiner est disposée dans le poste d'éclairage et détection, au centre d'un volume cylindrique axé perpendiculairement à la surface d'examen par le dispositif de détection optique, et la mire est formée sur un support translucide, limitant au moins en partie ce volume cylindrique, qui est éclairé depuis l'extérieur de ce volume. La pièce à examiner est ainsi éclairée par transparence à travers la mire pour former la trame plane vue par le dispositif de détection. Une telle disposition offre l'avantage de la simplicité et son fonctionnement conformément à l'invention est satisfaisant en combinaison avec un éclairage assuré à l'aide d'une source de lumière blanche ordinaire. Le cas échéant, on prévoit de pouvoir faire tourner la pièce sur l'axe du volume cylindrique pour examiner à tour de rôle différentes portions de la pièce.

Dans le cadre des applications industrielles les plus courantes de l'invention, on réalise le procédé de l'invention en configurant une mire réelle ou virtuelle de sorte à créer en image de mire une trame en damier à mailles carrées de dimensions comprises entre 0,5 mm et 2 cm, en nombre compris entre 200 et 10 000, sous un éclairage en lumière blanche d'angle au centre compris entre 20 et 30 degrés. En variant éventuellement l'angle d'incidence de visée par l'orientation du dispositif de détection, l'invention permet de la sorte de détecter et analyser, tant en dimension qu'en localisation sur la pièce, des rugosités allant de 0,002 microns à 2 microns, la rugosité étant ici exprimée en sa valeur R_{Q} traditionnelle. Signalons d'autre part qu'une simple modification de la distance entre le dispositif de détection et la pièce examinée permet d'adapter un appareillage déterminé à l'examen de pièces dont les dimensions diffèrent par homothétie.

D'autres caractéristiques et avantages de l'invention ressortiront de la description détaillée qui suit d'une forme de réalisation particulière, non limitative, et des dessins ci-annexés, dans lesquels :
- La figure 1 représente de manière schématique la structure du poste d'examen optique d'un exemple de dispositif suivant l'invention, utilisé pour le contrôle du polissage d'une pièce mécanique en cours de fabrication ;
- La figure 2 représente une variante d'un tel poste utilisé dans le cas de pièces planes, telles des tôles ;
- Les figures 3 à 5 illustrent des exemples de dessins de mire pour des surfaces non planes.

Sur la pièce 1, en matériau métallique, réfléchissant par nature, on projette une mire de sorte à former, par réflexion sur la pièce vers une caméra de détection 3, une image de mire virtuelle constituant en plan une trame qui présente des zones alternativement sombres et claires réparties suivant un réseau de périodicité spatiale prédéterminée. Dans un exemple particulièrement simple pour la suite des opérations, cette trame est, de manière plus précise, un réseau à mailles orthogonales, sous la forme d'un damier, les zones claires et sombres étant des carrés de même surface.

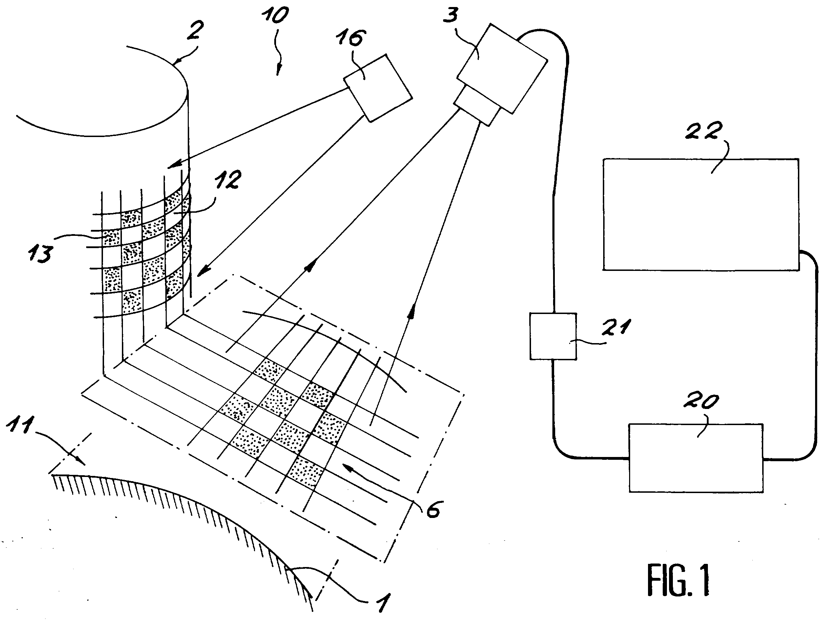

En conformité avec les caractéristiques de l'invention, le dispositif schématisé sur la figure 1 comporte un poste 10 d'examen optique de la pièce 1, qui s'y trouve maintenue par un support non représenté. Des moyens d'éclairage de sa surface 11 sont illustrés par une lampe de lumière blanche 16 et par une mire 2 placée sur le trajet du faisceau lumineux pour réfléchir celui-ci vers la pièce 1 sous un angle de 45 degrés.

Cette mire 2 présente des zones claires blanches 12 en alternance avec des zones sombres noires 13. Son dessin n'est généralement pas celui d'un damier régulier, car elle est configurée de manière à obtenir le dessin désiré pour la trame 6, image réfléchie de la mire 2, donc en fonction des conditions opératoires et de la forme de la pièce 1, cette dernière pouvant être quelconque.

La lumière réfléchie par la pièce 1 et affectée par la trame 6, est détectée par une caméra CCD 3 qui, pour l'ensemble de la surface qu'elle capte, fournit un signal électrique dans lequel des variations de tension traduisent en forme analogique les intensités lumineuses reçues, variables d'un pixel à l'autre.

Ce signal est transmis vers un ordinateur 20 où ont été installés les programmes de traitement d'image suivant l'invention, par l'intermédiaire d'une carte électronique 21 de numérisation des données d'entrée, qui est en réalité incorporée dans l'ordinateur. Les résultats de l'analyse effectuée par les calculs s'affichent sur un écran 22 associé à l'ordinateur 20, lequel est également équipé de tout matériel périphérique classique, dont une souris non représentée de pointage sur l'écran.

Le programme principal mis en oeuvre dans l'ordinateur au cours de l'examen de la surface 11 est élaboré de manière à faire ressortir sur l'écran sélectivement les contrastes de luminosité tels qu'ils résultent des phénomènes de diffusion de la lumière réfléchie par les lignes de contraste entre zones claires et zones sombres de la trame 6. Ainsi, l'opérateur voit ressortir sur l'écran, non pas directement l'image de mire réfléchie vers la caméra, mais une cartographie des variations de contraste que provoquent les rugosités recherchées par diffusion de la lumière réfléchie à partir des contrastes de la trame. Le traitement d'image effectué fait ressortir les régions de surface rugueuse à tel point qu'il est possible de les distinguer à l'oeil sur l'écran. Cependant, le programme installé sur l'ordinateur dans le cas décrit ici calcule également des résultats chiffrés point par point dont on fait apparaître la valeur sur l'écran sous la commande de la souris.

L'ensemble du procédé de l'invention implique en première étape, de déterminer le tracé de la mire 2. Ce n'est guère que quand les portions de surface de la pièce sont planes que la mire peut être un simple damier. La plupart du temps, on calcule sur ordinateur le dessin de la mire, c'est-à-dire par exemple le tracé qu'il conviendra d'imprimer en seconde étape, sur un feuillet en matière déformable qui est ramené à plat pour l'impression et qui est ensuite appliqué sur un support présentant une surface développable pour le recevoir.

Les informations admises en paramètres variables prises en compte par le programme d'élaboration de ce tracé sont de plusieurs ordres.

Un premier groupe comprend tous les éléments de définition géométrique de la surface de la pièce dont on cherche à vérifier la qualité à différentes étapes de sa fabrication, étant entendu que le même système pourrait être utilisé pour vérifier le polissage de pièces toutes identiques au même modèle à l'issue d'une fabrication en série, les pièces étant alors admises successivement dans le poste d'examen optique de manière automatique.

Il peut s'agir, par exemple, de pièces de forme simple comme des cylindres, des plaques planes, etc., ou de pièces de forme beaucoup plus complexe. Ces informations de forme sont élaborées par ailleurs en fichier informatique par tout moyen en soi connu, ou par formule analytique pour certaines surfaces, comme c'est le cas d'un paraboloïde ou de cages de roulements à billes. Préférentiellement on utilise les mêmes fichiers de données que ceux qui résultent d'une conception assistée par ordinateur ou qui servent à la commande des machines d'usinage automatique assurant la fabrication des pièces.

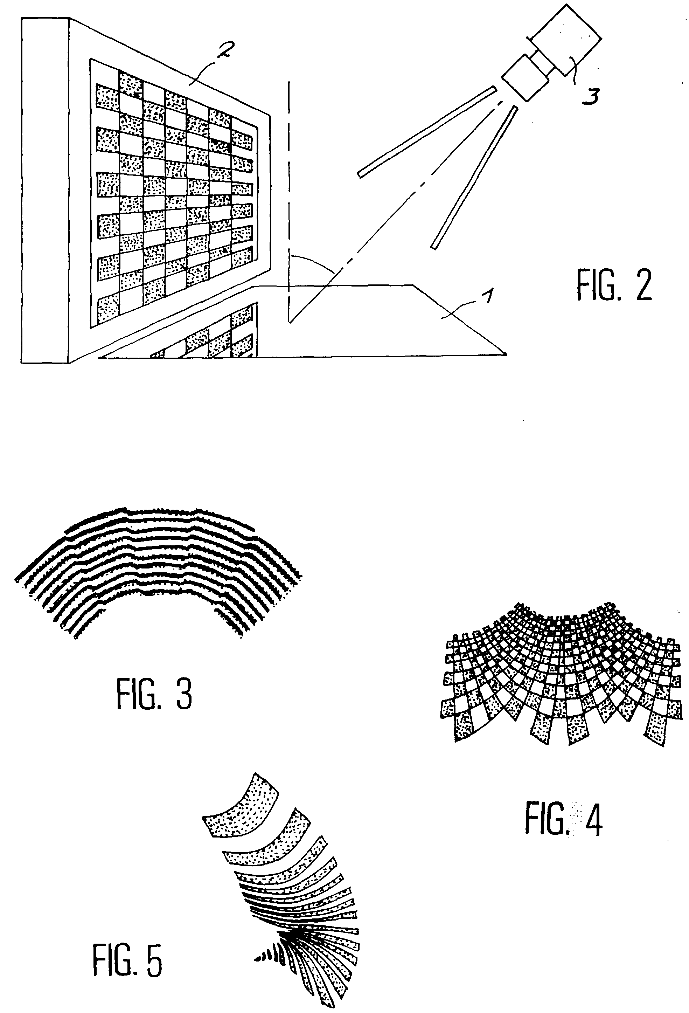

A titres d'exemples, on a représenté en figure 3 le dessin d'une mire convenant pour un cylindre de révolution, en figure 4 celui d'un mire pour un paraboloïde de révolution, en figure 5 celui d'un mire pour un tore.

Un second groupe d'informations d'entrée comprend les informations relatives à la forme du support matériel de la mire, en général choisie par expertise, et à la configuration que l'on entend adopter dans les dispositions relatives entre pièce, mire, source ou sources d'éclairage et caméra de détection, en distances et orientations. Cette configuration du montage matériel est aussi déterminée en général par expertise.

D'autres paramètres comprennent le pas du réseau à former en tant que trame image de la mire réfléchie par la surface de la pièce, la largeur des traits de cette trame, le degré de contraste entre ces traits et la surface occupée entre eux par le vide de chaque maille, ou plus généralement la forme des motifs de cette trame, ainsi que ses dimensions hors tout et la taille de la maille élémentaire. Ces paramètres peuvent être prédéterminés par l'utilisateur en fonction d'un savoir-faire qui lui permet de prédire leur relation avec les imperfections de rugosité à déceler. Ils peuvent aussi être calculés sur ordinateur par un programme annexe en fonction de la sensibilité à ces imperfections recherchée et du rendu en lecture de leurs effets en estompage de la trame.

Après l'étape d'impression de la mire, qui peut être réalisée à distance, sur un site différent, cette mire est mise en place dans le poste 10 pour servir à l'examen de la pièce 1. Sous l'éclairage prévu, on procède en temps réel à l'analyse du tramage réfléchi par la surface de la pièce tel qu'il est vu par la caméra de détection. Là aussi le traitement s'effectue de manière programmée sur ordinateur.

Ce traitement prend en compte des caractéristiques propres au contrôle à effectuer, notamment celles propres à des états de surface à détecter, telles que des valeurs moyennes ou locales de la rugosité, son anisotropie éventuelle, l'indice d'un mauvais polissage global, la localisation de zones demandant un contrôle spécial. Il fait aussi intervenir des seuils aptes à déclencher des alarmes ou des commandes automatiques, telle que la mise au rebut d'une pièce jugée défectueuse d'après les résultats de cette analyse, ce qui est utile principalement dans le cas d'un fonctionnement en ligne pour une fabrication en série. Elle est établie en fonction d'une comparaison des intensités lumineuses perçues en chaque pixel conduisant à la différence entre les valeurs extrêmes pour les pixels de son voisinage présentant un maximum et un minimum d'intensité, la taille de ce voisinage étant telle qu'elle contienne à la fois des pixels reflétant une zone sombre de la mire et des pixels reflétant une zone claire.

Dans tous les cas, du moins dans l'exemple décrit ici, l'ordinateur 20 met en oeuvre un programme de traitement d'image pour déterminer point par point en bidimensionnel une cartographie du contraste lumineux entre un pixel central et les pixels voisins, qui est visualisée sur l'écran 22. Cette carte des contrastes témoigne de l'état de surface de la pièce 1 pour la portion correspondant à la surface 11 captée par la caméra 3.

La qualité des indications de rugosité obtenues, pour des niveaux de rugosité qui seraient totalement imperceptibles à l'oeil nu, est liée à l'exploitation qu'il est fait suivant l'invention des phénomènes de diffusion de la lumière.

A ce sujet, on sait que la réflexion d'une onde lumineuse incidente donne lieu non seulement à une onde spéculaire, émise dans une direction spéculaire dont l'angle est donné par la loi de Descartes, mais aussi à des ondes diffusées réparties dans un cône de diffusion autour de la direction spéculaire. On sait aussi que pour un angle d'incidence constant (par exemple 30 degrés par rapport à la normale à la surface) et à égalité de longueur d'onde incidente (par exemple 0,6 µm), la puissance spéculaire décroît quand la rugosité de la surface réfléchissante, exprimée par la hauteur des rugosités, augmente, suivant une loi qui dépend, entre autres, du rapport entre le pas des rugosités et la longueur d'onde de la lumière. Quand cette rugosité devient nulle, la surface étant lisse comme celle d'un miroir parfait, c'est la totalité de la puissance réfléchie qui l'est dans la direction spéculaire, alors que pour de très fortes rugosités, dont la hauteur excède par exemple 0,1 micromètre, la totalité de la puissance réfléchie est au contraire diffusée et l'image est brouillée, la puissance réfléchie étant bien entendu dans un rapport à la puissance incidente qui dépend du coefficient de réflexion propre au matériau de la pièce examinée.

Si l'on considère une ligne particulière d'éclairage, supposée transversale au chemin de la lumière, l'image diffusée comprend une ligne lumineuse qui est plus ou moins élargie suivant la rugosité de la surface qui la réfléchit. Par ailleurs, si l'on utilise une source lumineuse étendue, sans collimateur, l'intensité lumineuse mesurée en un point intègre des ondes lumineuses issues de différents points et diffusées suivant différents angles. Et comme le cône de diffusion s'élargit quand la rugosité augmente, la puissance intégrée sur une portion de ce cône diminue. Ceci rend possible de distinguer des rugosités intermédiaires (par exemple 0,04 micromètres) tant des fortes rugosités (par exemple 0,1 µm) que des faibles rugosités (par exemple 0,01 µm), alors même que l'image d'une source ponctuelle dans la direction strictement spéculaire serait sensiblement nulle dans l'un et l'autre de ces deux derniers cas.

Prendre en compte le cône de diffusion plutôt que la seule intensité mesurée à son maximum dans la direction spéculaire permet donc d'améliorer sensiblement les capacités du dispositif de l'invention.

Une trame constituée par une série de lignes lumineuses transversales au profil de rugosité fournit une image captée linéaire qui contient l'information sur l'élargissement du cône de diffusion. La puissance du faisceau recueillie à des distances en correspondance avec le pas de répétition des lignes diminue lorsque la rugosité augmente. Pour extraire l'information, le traitement du profil capté consiste à projeter (au sens vectoriel du terme) ce profil sur un profil idéal qui serait obtenu avec une surface lisse parfaitement réfléchissante. On obtient alors un paramètre scalaire, quantifiant en unités arbitraires la netteté de l'image réfléchie. L'information traduisant la rugosité de la surface réfléchissante est ainsi établie en s'affranchissant d'autres effets ayant incidence sur la réflexion de la lumière, tels que la présence de défauts de forme géométriques entraînant des distorsions des lignes, la variabilité de la puissance de la source d'éclairage, la variabilité du coefficient de réflexion intrinsèque du matériau de la surface réfléchissante ou les variations de l'éclairage embiant lié au fait qu'on ne procède pas en chambre noire.

Dans les situations les plus courantes de pièces métalliques ayant subi un polissage dont la rugosité est à vérifier en cours de fabrication ou à l'issue d'une fabrication en série, le dispositif décrit est utilisé pour détecter des rugosités dont les dimensions sont les mêmes en pas et en altitude (comme elles résultent notamment de l'emploi d'une pâte à roder) et qui sont exprimées de façon usuelle par la valeur R_{Q} correspondant à l'écart-type quadratique de leur profil.

Le programme de traitement de l'image réfléchie captée par la caméra CCD 3 est donc élaboré, dans l'exemple décrit, pour fournir la valeur de R_{Q} en chaque point ou aire d'image, le cas échéant en chaque pixel, ce pour quoi il prend en compte la courbe de réponse de la caméra dans la traduction des intensités lumineuses reçues en tension du signal électrique transmis vers l'ordinateur, ainsi que la courbe de réponse de la carte d'entrée qui dans ce dernier, convertit l'information véhiculée par le signal électrique en une donnée numérique.

Il est en général d'importance négligeable que la maille du carré soit plus ou moins grande par rapport aux aires d'image constituant le voisinage de chaque pixel sur lesquelles on calcule la différence entre le minimum et le maximum des intensités captées. Par contre, on s'intéresse plus à ce que chaque maille couvre plus d'un pixel, notamment de 5 à 10 pixels. Par souci de simplicité et pour une bonne sensibilité de l'analyse on prévoit par ailleurs que chaque aire considérée couvre une maille du réseau, le nombre total de mailles pour l'ensemble de la surface vue par la caméra correspondant par exemple à 300 mailles éclairées en damier sur fond noir.

Le traitement d'image proposé conduit à une excellente qualité dans l'analyse des rugosités locales. D'autres irrégularités de surface apparaissent également, telles que les stries de largeur inférieure au pas de répétition des traits de la trame, dès lors qu'il s'agit de rayures ou nervures qui traversent des lignes de contraste de la trame. A la détection des défauts de polissage ainsi assurée dans l'exemple décrit, on peut d'ailleurs ajouter une analyse des effets en distorsion de la trame, visant alors la détection de défauts de forme de la pièce.

Pour l'essentiel, le programme de calcul implique, pour chaque joint (ou aire) de l'image couvrant un voisinage de 5 x 5 pixels autour du pixel courant, de déterminer le minimum et le maximum de l'intensité lumineuse perçue, d'où l'on déduit la valeur maximale de contraste parmi les pixels du voisinage, auquel on compare le contraste entre maximum et minimum au pixel courant. La comparaison est significative de la perte de réflectivité due sélectivement à la rugosité dès lors que l'angle d'incidence de la lumière est réglé pour que la perte de réflectivité globale par diffusion ne dépasse pas 40 %.

En réalité, le programme calcule comme indice de contraste caractéristique de la perte de réflectivité le rapport entre le contraste au pixel courant et la valeur maximale de contraste local. A partir de ces indices de contraste, il met en oeuvre un algorithme de calcul de la rugosité suivant les lois de l'optique corpusculaire. L'un des facteurs du calcul tient compte, quand la précision recherchée en fait sentir le besoin, des particularités de la pièce examinée (liée au matériau la constituant et au type de polissage), en ce qui concerne la courbe de variation de la rugosité en fonction de la réflectivité point par point, par atténuation à partir du facteur de réflexion, autrement dit de la réflectivité à rugosité nulle.

Des programmes annexes permettent, entre autres, d'émettre un signal vocal en cas de détection d'une anomalie dans le montage de l'appareillage, par exemple si l'éclairage ne s'est pas mis en route ou s'il est insuffisant, d'afficher des informations statistiques concernant la pièce en cours d'examen, une rugosité moyenne sur la totalité de la surface examinée ou sur une portion déterminée de cette surface, le maximum et le minimum des rugosités rencontrées, et de commander par la souris l'affichage sur l'écran des résultats calculés pour l'endroit pointé par la souris. C'est ainsi que l'on peut utiliser cette souris pour confirmer ou infirmer des défauts de surface dont l'opérateur décèle le risque sur l'écran dans le cas d'un examen hors ligne.

Une caméra CCD du type de celle qui est utilisée dans l'exemple décrit permet l'analyse de contraste pour des valeurs de gris variant dans un rapport de 1/200 à 1/300 entre les puissances émises respectivement pour le noir et le blanc. Il en résulte une sensibilité optimale d'autant de valeurs intermédiaires des indices de contraste, donc des rugosités. Par ailleurs, la configuration de la mire implique, en fonction de la géométrie de la pièce, un choix du nombre de mailles (ou nombre de tâches encrées noires sur fond blanc) sur l'étendue de détection par la caméra, de sorte à obtenir la définition d'image voulue en termes de pixels distingués par la détection.

Avec la même sensibilité et à partir du même appareillage, il est possible de faire aisément varier la gamme des rugosités prises en compte en modifiant les conditions d'éclairage, en particulier soit en changeant la mire, soit en modifiant simplement l'angle d'incidence de la lumière reflétée vers la caméra, soit bien évidemment en modifiant l'un et l'autre. A titre d'exemple, si les réglages et calculs sont effectués pour fournir des valeurs de gris, et donc les indices de contraste, pour des rugosités variant de 0,002 µm à 0,2 µm quand l'incidence de visée de la caméra est normale à la surface examinée, celle-ci pouvant être assimilée à une surface plane pour les rugosités recherchées, on fera passer cette gamme d'analyse aux valeurs de rugosité allant de 0,02 µm à 2 µm en déplaçant l'orientation de la caméra jusqu'à une incidence rasante à 6 degrés de la surface.

Naturellement et comme il ressort déjà amplement de ce qui précède l'invention n'est pas limitée au mode de mise en oeuvre particulier qui a été décrit ci-dessus à titre d'exemple, pas plus qu'aux variantes et aux cas d'application qui ont été spécifiée. Elle s'étend comme il est d'usage à toutes variantes et applications, ainsi qu'à tout équivalent de ses éléments essentiels tels qu'ils sont définis par les revendications interprétées à la lumière de la description.

En particulier, la mire 2 fonctionnant par réflexion peut être aisément remplacée par une mire imprimée sur un film transparent et apposée sur un support translucide à éclairer par transparence pour projection sur la pièce à examiner. Cette solution est illustrée par la figure 2 avec un dessin de mire en simple damier à maille carrée éclairé par transmission sur une table lumineuse qui est aménagée pour une bonne homogénéité en puissance lumineuse, n'entraînant pas de plus de 1 à 2 % de variation d'un endroit à un autre de sa surface utile. Elle est alors interposée entre la lampe 16 et la pièce 1, et ses motifs sont constitués de zones sombres opaques en alternance avec des zones claires transparentes.

En ce qui concerne également la mire, il peut s'agir d'une image formée de manière dynamique sur un écran cathodique éclairant la pièce examinée, à partir d'informations mémorisés définissant sa configuration, limitées ici au dessin des motifs. Dans ce cas, il est intéressant de disposer d'une bibliothèque de différentes configurations enregistrées en mémoire sur ordinateur, afin de pouvoir les expérimenter pour choisir celle qui conviendra le mieux à une pièce déterminée, et le cas échéant, en observant son image réfléchie, pour créer la trame désirée en corrigeant la mire disponible ainsi choisie.

D'autre part, là où le procédé et le dispositif décrits ont été utilisés pour examiner des pièces métalliques polies, ils pourraient tout autant s'appliquer à la détection des états de surface d'autres pièces à surface réfléchissante dans les conditions opératoires, y compris par exemple au contrôle de la rugosité de pièces en matière plastique moulée n'ayant pas à être polies.

Dans toutes ces variantes, on retrouvera les mêmes fonctions des éléments essentiels de l'invention, ainsi que les avantages résidant en premier lieu dans la capacité d'adaptation à des pièces quelconques et dans la sensibilité de la détection des irrégularités de surface de taille inférieure à la longueur d'onde de la lumière utilisée.

## Revendications

1. Procédé de détection de l'état de surface de pièces à surface réfléchissante, applicable notamment au contrôle de rugosité d'une pièce polie, suivant lequel on expose ladite pièce à une mire d'éclairage présentant des zones alternativement claires et sombres, on détecte la lumière réfléchie par ladite pièce par un dispositif de détection sensible aux intensités lumineuses pixel par pixel, la configuration de ladite mire étant déterminée de sorte que l'image de mire réfléchie vers ledit dispositif de détection forme une trame plane de zones alternativement claires et sombres suivant un réseau régulier en cas de réflectivité totale par une surface lisse, et l'on examine sur l'image ainsi réfléchie des variations de contraste que provoquent des irrégularités de surface, notamment des rugosités locales, par diffusion de la lumière réfléchie à partir des contrastes de la trame, en comparant en chaque pixel le contraste détecté à la valeur maximale de contraste observée parmi les pixels de son voisinage, l'angle d'incidence de la lumière étant réglé pour que la perte de réflectivité globale par diffusion ne dépasse pas 40 %.

2. Procédé suivant la revendication 1, caractérisé en ce que la dite mire est configurée de sorte que ladite trame plane présente lesdites zones alternativement claires et sombres suivant un réseau à pas régulier prédéterminé en fonction de la géométrie de la pièce et/ou de la définition de rugosités à détecter en termes de pixels distingués par ledit dispositif de détection, ledit réseau étant notamment en forme de damier à mailles claires et sombres de mêmes dimensions.

3. Procédé suivant la revendication 1 ou 2, caractérisé en ce que l'on calcule aux différents points de l'image des indices de contraste traduisant l'amplitude des rugosités locales de la pièce examinée en fonction de ladite comparaison.

4. Procédé suivant la revendication 3, caractérisé en ce qu'il comporte plusieurs phases pour chacune desquelles on règle l'orientation dudit dispositif de détection par rapport à ladite pièce éclairée par ladite mire pour faire varier la sensibilité des indices de contraste calculés dans une gamme prédéterminée de dimensions des rugosités à détecter, notamment pour examiner une même pièce mécanique en différentes étapes de son polissage.

5. Procédé suivant l'une quelconque des revendications 1 à 4, caractérisé en ce que l'on soumet à examen avec le même dispositif de détection successivement chacune des pièces conformes géométriquement à un même modèle dans une fabrication desdites pièces en série.

6. Procédé suivant l'une quelconque des revendications 1 à 5, caractérisé en ce que la configuration de ladite mire est au moins en partie réalisée par un programme mis en oeuvre sur ordinateur pour calculer son dessin en fonction de données numérisées de définition de la forme de la pièce à examiner et des conditions d'éclairage prévues.

7. Dispositif de détection de l'état de surface de pièces à surface réfléchissante, applicable notamment au contrôle de la rugosité superficielle d'une pièce polie, comportant, dans un poste d'examen (10) de ladite pièce (1), des moyens d'exposition de sa surface (11) à une mire (2) présentant des zones alternativement claires (12) et sombres (13), configurée en fonction notamment de la forme géométrique de la pièce à examiner, un dispositif (3) de détection de la lumière réfléchie par ladite pièce (1), sensible aux intensités lumineuses reçues pixel par pixel, ledit dispositif de détection (3) étant disposé de sorte que l'image de mire réfléchie vers lui forme une trame plane (6) de zones alternativement claires et sombres, de préférence suivant un réseau de périodicité spatiale prédéterminée, et des moyens (20) pour faire ressortir sur l'image réfléchie ainsi détectée les variations de contraste que provoquent les irrégularités de surface, notamment les rugosités locales, par diffusion de la lumière réfléchie à partir des contrastes de ladite trame (6) et pour comparer le contraste détecté en chaque pixel avec un maximun de contraste constaté en son voisinage.

8. Dispositif suivant la revendication 7, caractérisé en ce qu'il comporte des moyens de calcul aux différents points de l'image d'indices de contraste traduisant l'amplitude des rugosités locales de la pièce examinée en fonction de ladite comparaison.

9. Dispositif suivant la revendication 7 ou 8, dans lequel ledit dispositif de détection comporte un système bidimensionnel de capteurs de lumière à détection simultanée, de préférence constitué par une matrice de capteurs telle qu'une caméra de type CCD traduisant les intensités détectées en un signal analogique.

10. Dispositif suivant la revendication 7, 8 ou 9, caractérisé par des moyens d'éclairage de ladite pièce associés à un support à surface développable pour recevoir en application sur lui une mire physique à projeter sur ladite pièce par transparence ou réflexion pour former ladite trame.

11. Dispositif suivant la revendication 7, 8 ou 9, caractérisé en ce qu'il comporte des moyens automatiques de commande d'affichage de ladite mire sous forme dynamique sur un écran cathodique d'éclairage de ladite pièce, ainsi de préférence que des moyens automatiques d'adaptation de sa configuration en fonction de résultats d'examen de ladite trame réfléchie vers ledit dispositif de détection par ladite pièce.

12. Dispositif suivant l'une quelconque des revendications 7 à 11, caractérisé en ce qu'il comporte des moyens de calcul automatique sur ordinateur pour déterminer à partir des intensités lumineuses détectées, éventuellement traduites sous forme analogique puis préalablement numérisées, des indices de contraste caractéristiques de la perte de contraste entre un pixel et un maximum de contraste des pixels voisins, ainsi de préférence que des valeurs de rugosité correspondantes, et pour commander la visualisation du résultat obtenu en chaque point d'image défini par ses coordonnées sur ladite pièce.

13. Dispositif suivant l'une quelconque des revendications 7 à 12, caractérisé en ce qu'il comporte des moyens pour comparer à des valeurs seuils lesdites variations de contraste, éventuellement traduites en indices de contraste ou rugosités conformément à la revendication 11, et pour signaler toute situation où la comparaison effectuée témoigne d'une rugosité locale ou moyenne supérieur à une valeur prédéterminée.

## Patentansprüche

1. Verfahren zur Detektierung des Zustandes der Oberfläche von Objekten mit einer reflektierenden Oberfläche, insbesondere anwendbar zur Kontrolle der Rauhigkeit eines polierten Objektes, das folgende Schritte umfaßt:
- Einstrahlenlassen eines beleuchteten Testbildes mit abwechselnd hellen und dunklen Bereichen auf das Objekt,
- Detektion des von dem Objekt reflektierten Lichtes mit einer Detektionsvorrichtung, die pixelweise für Lichtstärken empfindlich ist, wobei die Gestalt des Testbildes derart gewählt wird, daß das in Richtung auf die Detektionsvorrichtung reflektierte Abbild des Testbildes im Falle vollkommener Reflektivität an einer glatten Oberfläche ein ebenes Raster aus abwechselnd hellen und dunklen Bereichen gemäß einem regelmäßigen Gitter bildet
- Beobachten von Kontraständerungen in dem derart reflektierten Bild, die von Unregelmäßigkeiten der Oberfläche, insbesondere von lokalen Rauhigkeiten, durch Streuung des von Kontrasten des Rasters stammenden reflektierten Lichtes hervorgerufen werden, indem bei jedem Pixel der detektierte Kontrast mit dem an den ihn umgebenden Pixeln beobachteten maximalen Kontrastwert verglichen wird und wobei der Einfallswinkel des Lichtes so eingestellt wird, daß der globale Reflektivitätsverlust durch Streuung 40% nicht übersteigt.

2. Verfahren nach Anspruch 1, dadurch gekennzeichnet, daß das Testbild derart ausgebildet ist, daß in dem ebenen Raster die abwechselnd hellen und dunklen Bereiche in Form eines Gitters mit regelmäßigen Abständen vorliegen, das in Abhängigkeit von der Geometrie des Objekts und/oder von der Größenordnung der zu detektierenden Rauhigkeit, ausgedrückt durch die von der Detektionsvorrichtung unterschiedenen Pixel, vorgegeben wird, wobei das Gitter insbesondere eine Schachbrettform mit hellen und dunklen Feldern gleicher Größe aufweist.

3. Verfahren nach Anspruch 1 oder 2, dadurch gekennzeichnet, daß man an verschiedenen Punkten des Bildes Kontrastkennziffern berechnet, die das Ausmaß der lokalen Rauhigkeit des untersuchten Objektes als Funktion des genannten Vergleichs zum Ausdruck bringen.

4. Verfahren nach Anspruch 3, dadurch gekennzeichnet, daß es aus verschiedenen Phasen besteht, und man in jeder dieser Phasen die Ausrichtung der Detektionsvorrichtung in Bezug auf das von dem Testbild beleuchtete Objekt unterschiedlich einstellt, um die Empfindlichkeit der berechneten Kontrastkennziffern innerhalb einer vorgegebenen Größenskala der zu detektierenden Rauhigkeit variieren zu lassen, insbesondere, um dasselbe Werkstück auf verschiedenen Stufen des Polierprozesses zu untersuchen.

5. Verfahren nach einem der Ansprüche 1 bis 4, dadurch gekennzeichnet, daß man im Rahmen der Serienfertigung eines Objektes nacheinander jedes einzelne dieser demselben Modell geometrisch entsprechenden Objekte einer Untersuchung mit derselben Vorrichtung zur Detektierung unterzieht.

6. Verfahren nach einem der Ansprüche 1 bis 5, dadurch gekennzeichnet, daß die Gestalt des Testbildes zumindest teilweise durch ein auf einem Rechner ablaufendes Programm bestimmt wird, das dessen Muster in Abhängigkeit von Digitalisierungsdaten, die die Form des zu untersuchenden Objektes wiedergeben, und in Abhängigkeit von den vorgesehenen Beleuchtungsbedingungen berechnet.

7. Vorrichtung zur Detektierung des Zustandes der Oberfläche von Objekten mit reflektierender Oberfläche, insbesondere verwendbar zur Kontrolle der Oberflächenrauhigkeit eines polierten Objektes in einem Prüfstand (10) für das genannte Objekt, die folgendes umfaßt:
- Mittel zum Einstrahlenlassen eines Testbildes (2) auf seine Oberfläche (11), das abwechselnd helle (12) und dunkle (13) Bereiche aufweist und dessen Gestalt im wesentlichen in Abhängigkeit von der geometrischen Form des zu untersuchenden Objektes gewählt wird;
- eine Detektionsvorrichtung (3) für das von dem Gegenstand (1) reflektierte Licht, die pixelweise für die empfangenen Lichtintensitäten empfindlich ist, wobei die Detektionsvorrichtung (3) derart ausgerichtet ist, daß das in ihre Richtung reflektierte Abbild des Testbildes ein ebenes Raster (6) aus abwechselnd hellen und dunklen Bereichen bildet, vorzugsweise gemäß einem Gitter mit vorgegebener räumlicher Periodizität; und
- Mittel (20), die dem derart detektierten reflektierten Bild die Kontraständerungen entnehmen, die von Unregelmäßigkeiten der Oberfläche, insbesondere von lokalen Rauhigkeiten, durch Streuung des von Kontrasten des Rasters (6) stammenden reflektierten Lichtes hervorgerufen werden, und mit denen der an jedem Pixel detektierte Kontrast mit einem in seiner Nachbarschaft festgestellten Kontrastmaximum verglichen werden kann.

8. Vorrichtung nach Anspruch 7, dadurch gekennzeichnet, daß sie Mittel zur Berechnung von Kontrastkennziffern an den verschiedenen Punkten des Bildes umfaßt, die die Größe der lokalen Rauhigkeit des untersuchten Objektes als Funktion des genannten Vergleichs zum Ausdruck bringen.

9. Vorrichtung nach Anspruch 7 oder 8, bei der die Detektionsvorrichtung ein zweidimensionales System von Lichtsensoren zur gleichzeitigen Detektion umfaßt, vorzugsweise in Form einer Detektormatrix, wie etwa einer CCD-Kamera, die die detektierten Lichtintensitäten in ein analoges Signal umwandelt.

10. Vorrichtung nach Anspruch 7, 8 oder 9, gekennzeichnet durch Mittel zur Beleuchtung des Objektes, die mit einem Träger mit entwickelbarer Oberfläche in Verbindung stehen, der dazu geeignet ist, ein physikalisches Testbild aufzunehmen und auf das Objekt mittels Transparenz oder Reflexion zu projizieren, wobei das genannte Raster gebildet wird.

11. Vorrichtung nach Anspruch 7, 8 oder 9, dadurch gekennzeichnet, daß sie Mittel zur automatischen Steuerung der Anzeige des Testbildes in dynamischer Form auf einem Bildschirm mit Kathodenstrahlröhre zur Beleuchtung des Objektes umfaßt, sowie vorzugsweise Mittel zur automatischen Anpassung seiner Gestalt in Abhängigkeit von den Ergebnissen der Untersuchung des von dem Objekt in Richtung auf die Detektionsvorrichtung reflektierten Rasters.

12. Vorrichtung nach einem der Ansprüche 7 bis 11, dadurch gekennzeichnet, daß sie Mittel zur automatischen Berechnung auf einem Rechner umfaßt, um aus den detektierten Lichtintensitäten, möglicherweise ursprünglich in analoger Form ausgedrückt und danach zunächst digitalisiert, Kontrastkennziffern zu ermitteln, die für den Kontrastverlust zwischen einem Pixel und einem Kontrastmaximum unter den Nachbarpixeln charakteristisch sind, sowie vorzugsweise zur Berechnung der entsprechenden Rauhigkeitswerte, und um die Visualisierung der gewonnenen Ergebnisse zu steuern, die an jedem durch seine Koordinaten auf dem Objekt definierten Bildpunkt erhalten werden.

13. Vorrichtung nach einem der Ansprüche 7 bis 12, dadurch gekennzeichnet, daß sie Mittel zum Vergleich der Kontrastunterschiede, möglicherweise gemäß Anspruch 11 als Kontrastkennziffern oder als Rauhigkeiten ausgedrückt, mit Schwellwerten sowie Mittel zur Anzeige in solchen Fällen umfaßt, in denen der durchgeführte Vergleich eine lokale oder mittlere Rauhigkeit ergibt, die über einem vorgegebenen Wert liegt.

## Claims

1. Process for detecting the surface state of parts with a reflecting surface, applicable in particular to the control of the roughness of a polished part, according to which the said part is exposed to a lighting test pattern having alternate light and dark zones, the light reflected by the said part is detected by a detection device sensitive to the light intensities pixel by pixel, the configuration of the said test pattern being determined so that the image of the test pattern reflected towards the said detection device forms a planar grid of alternate light and dark zones according to a regular network in the case of total reflectivity by a smooth surface, and an examination is made of variations in contrast on the image thus reflected caused by irregularities of the surface, in particular local roughnesses, by diffusion of the reflected light from contrasts of the grid, by comparing the contrast detected in each pixel with the maximum value of the contrast observed among the pixels in its vicinity, the angle of incidence of the light being adjusted so that the overall loss of reflectivity by diffusion does not exceed 40 %.

2. Process according to claim 1, characterized in that the said test pattern is configured so that the said planar grid has the said alternate light and dark zones following a network with a regular step predetermined as a function of the geometry of the part and/or of the definition of the roughnesses to be detected in terms of pixels distinguished by the said detection device, the said network being in particular in the form of a checkerboard with light and dark meshes of the same size.

3. Process according to claim 1 or 2, characterized in that contrast indices are calculated at different points of the image, these representing the amplitude of the local roughnesses of the part examined as a function of the said comparison.

4. Process according to claim 3, characterized in that it comprises several phases for each of which the orientation of the said detection device is adjusted in relation to the said part illuminated by the said test pattern so as to vary the sensitivity of the calculated contrast indices within a predetermined range of dimensions for the roughnesses to be detected, in particular for examining the same mechanical part at different stages of its polishing.

5. Process according to any one of claims 1 to 4, characterized in that each of the parts corresponding geometrically to the same model in the manufacture of the said parts in series is successively subjected to an examination with the same detection device.

6. Process according to any one of claims 1 to 5, characterized in that the configuration of the said test pattern is at least partly produced by a programme put into operation on a computer for calculating its design as a function of the digitized data defining the form of the part to be examined and the lighting conditions provided.

7. Device for detecting the surface state of parts with a reflecting surface, applicable in particular to the control of the surface roughness of a polished part, comprising, in a station (10) for examining the said part (1), means for exposing its surface (11) to a test pattern (2) having alternate light zones (12) and dark zones (13), configured in particular as a function of the geometric form of the part to be examined, a device (3) for detecting the light reflected by the said part (1), sensitive to the light intensities received pixel by pixel, the said detection device (3) being disposed so that the image of the test pattern reflected to it forms a planar grid (6) of alternate light and dark zones, preferably according to a network with a predetermined spatial periodicity, and means (20) for revealing on the reflected image thus detected variations in contrast caused by irregularities of the surface, in particular local roughnesses, by diffusion of the light reflected from contrasts of the said grid (6) and for comparing the contrast detected in each pixel with a maximum contrast detected in its vicinity.

8. Device according to claim 7, characterized in that it includes means for calculating contrast indices at different points of the image, these representing the amplitude of the local roughnesses of the part examined as a function of the said comparison.

9. Device according to claim 7 or 8, wherein the said detection device comprises a two-dimensional system of light sensors with simultaneous detection, preferably consisting of a matrix of detectors such as a camera of the CCD type converting the intensities detected into an analogue signal.

10. Device according to claims 7, 8 or 9, characterized by means for illuminating the said part associated with a support with a developable surface for receiving in application thereon a physical test pattern to be projected onto the said part by transparency or reflection to form the said grid.

11. Device according to claim 7, 8 or 9, characterized in that it includes automatic means for commanding a display of the said test pattern in a dynamic form on a cathode screen for illuminating the said part, as well as, preferably, automatic means for adapting its configuration as a function of the results of an examination of the said grid reflected to the said detection device by the said part.

12. Device according to any one of claims 7 to 11, characterized in that it includes automatic computerized calculating means for determining, from the light intensities detected, possibly translated under an analogue form and then first of all digitized, contrast indices characteristic of the loss of contrast between a pixel and a maximum contrast of the neighbouring pixels, as well as, preferably, corresponding roughness values, and for commanding the visualization of the result obtained at each point of the image defined by its coordinates on the said part.

13. Device according to any one of claims 7 to 12, characterized in that it includes means for comparing the said contrast variations, possibly translated into contrast indices or roughnesses according to claim 11, with threshold values, and for indicating any situation where the comparison made reveals a local or mean roughness greater than a predetermined value.
